# EUROPEAN PATENT APPLICATION

(11) **EP 1 575 111 A1**
(43) Date of publication of application: **14.09.2005**
(21) Application number: 05004688.7
(22) Date of filing: 03.03.2005
(51) Int. Cl.: H01M 8/04, H01M 8/10

(54) **Fuel cell conditioning system and related method**

(30) Priority: 11.03.2004 JP 2004069583
(71) Applicant: NISSAN MOTOR CO., LTD., Kanagawa-ken (JP)
(72) Inventor: Kagami, Fumio, Yokosuka-shi Kanagawa 238-0023 (JP); Matsuoka, Naoya, Yokohama-shi Kanagawa 221-0852 (JP); Shimoi, Ryoichi, Yokohama-shi Kanagawa 236-0052 (JP)
(74) Representative: Grünecker, Kinkeldey, Stockmair & Schwanhäusser Anwaltssozietät

(57) **Abstract**

A fuel cell conditioning system and related method are disclosed to condition a fuel cell stack (2) to be ready for use. The fuel cell stack (2) is associated with a cell temperature controlled bath (3) such that a temperature of the fuel cell stack (2) is raised to a normal operating temperature upon which humidified fuel and oxidizer gas are supplied for a given time interval to the fuel cell (2) to generate electric power for that time period. After stopping the generation of electric power, supplying dry air and fuel to the fuel cell stack (2) causes residual moisture to be purged from the fuel cell stack (2). After purging, a temperature of the fuel cell stack (2) is lowered to a value below a freezing point to cause moisture to condense in a solid polymer membrane to contain water. Further, temperature-rise, electric power generation, dry purging and temperature-drop are repeatedly executed.

## Description

### BACKGROUND OF THE INVENTION

The present invention relates to fuel cell conditioning systems and related methods and, more particularly, to a fuel cell conditioning system and related method available to condition a fuel cell, incorporating a solid polymer electrolyte, to a state usable for a user.

A method of operating a fuel cell and a solid polymer electrolyte fuel cell are known from Japanese Patent Application Laid-Open No. 2003-217622 (on page 3 and in FIG. 1) as a method of conditioning (sometimes called "aging") the solid polymer electrolyte fuel cell after assembling.

With such a related art method of operating the fuel cell, when conditioning the fuel cell after assembling, the fuel cell is operated by increasing a gas utilization rate to a value close proximity to 100% to cause the fuel cell to be filled with product water (e.g., in flooding) in an effort to increase the amount of water contained in an electrolyte membrane to a saturated value.

### SUMMARY OF THE INVENTION

However, with the related art fuel cell aging method, in cases where a drop occurs in a voltage of the fuel cell due to the flooding, although the gas utilization rate is controllably lowered, it is probable to be become hard to follow a rapid drop in voltage of the fuel cell, causing damages to the fuel cell.

To address the above issue, one aspect of the present invention provides a fuel cell conditioning system for conditioning a fuel cell stack having a membrane electrode assembly composed of a fuel electrode and an oxidizer electrode, comprising a fuel supply line supplying fuel to the fuel electrode of the fuel cell stack, an oxidizer supply line supplying oxidizer to the oxidizer electrode of the fuel cell stack, a humidifier humidifying the fuel and the oxidizer being supplied to the fuel cell stack to supply moisture to the membrane electrode assembly thereof, a controller operative to render the fuel supply line, the oxidizer supply line and the humidifier operative to allow the fuel and the oxidizer, which are humidified, to be supplied to the fuel cell stack to generate electric power, and a cell temperature control device associated with the controller to raise and lower a temperature of the fuel cell stack.

According to another aspect of the present invention, there is provided a method of conditioning a fuel cell stack having a membrane electrode assembly composed of a fuel electrode and an oxidizer electrode, which method comprises raising a temperature of the fuel cell stack, supplying fuel and oxidizer to the fuel cell stack, humidifying the fuel and the oxidizer being supplied to the fuel cell stack to supply moisture to the membrane electrode assembly thereof, permitting the fuel cell stack to generate electric power, stopping a supply of the fuel and the oxidizer to the fuel cell stack and stopping humidifying the fuel and oxidizer, and lowering the temperature of the fuel cell stack to cause the moisture to condense in the electrode membrane assembly.

### BRIEF DESCRIPTION OF THE DRAWINGS

FIG. 1 is a schematic view of a fuel cell conditioning system to which a method of conditioning a fuel cell of a first embodiment according to the present invention is applied.
FIG. 2 is a flowchart for illustrating the conditioning method of the first embodiment.
FIG. 3 is a schematic view of a fuel cell conditioning system to which a method of conditioning a fuel cell of a second embodiment according to the present invention is applied.
FIG. 4 is a an essential cross-sectional view illustrating an exemplary cell structure of a fuel cell forming part of a solid polymer electrolyte fuel cell to which the present invention is applied.
FIG. 5 is a view of variations in an output voltage of the fuel cell in terms of an operating time for illustrating advantageous effects of the present invention.

### DETAILED DESCRIPTION OF THE PREFERRED EMBODIMENS

Now, embodiments according to the present invention are described in detail with reference to the accompanying drawings. Also, although no particular limitation is intended, the respective embodiments are described in conjunction with a method of conditioning a solid polymer electrolyte fuel cell stack for a fuel cell powered vehicle.

### (First Embodiment)

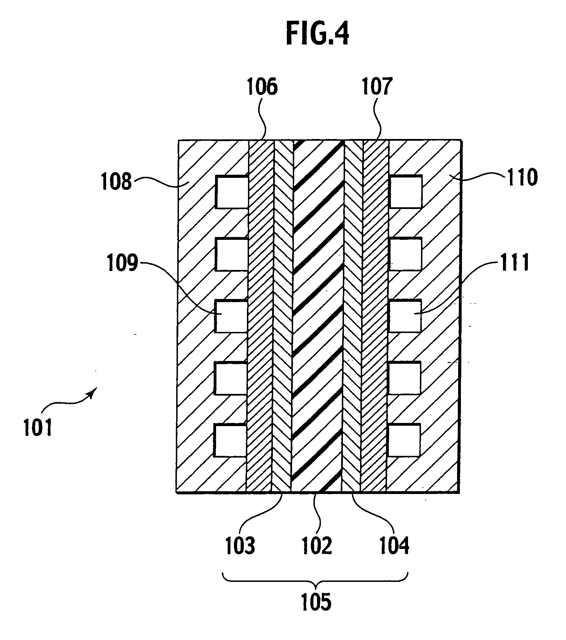

FIG. 4 is an essential cross-sectional view showing an exemplary cell structure of a fuel cell in a solid polymer electrolyte fuel cell to which the present invention is applied. In FIG. 4, the fuel cell 101, serving as one unit cell, is comprised of a membrane electrode assembly 105, a fuel electrode gas dispersion layer 106 and an oxidizer electrode gas dispersion layer 107 between which the membrane electrode assembly 105 is sandwiched on both sides thereof, and separators 108, 110 formed with a fuel gas flow channel, through which fuel gas is supplied, and an oxidizer gas flow channel 104 through which oxidizer gas is supplied.

The membrane electrode assembly 105 is comprised of a solid polymer electrolyte 102 formed of a solid polymer layer, with a hydrogen ion (proton) conductivity, which is made of fluorocarbon polymer, a fuel electrode 103 and an oxidizer electrode 104 formed on both surfaces of the polymer electrolyte membrane 102 and having reaction catalysts such as platinum (Pt), respectively.

The separators 108, 110 are made of dense carbon materials, respectively, which are gas impermeable, with one surface or both surfaces of each separator having a plurality of ribs by which a fuel gas flow channel 109 or an oxidizer gas flow channel 111 are defined. The fuel gas flow channel 109 and the oxidizer gas flow channel 111 have gas inlets (not shown), through which fuel gas and oxidizer gas are supplied, and gas outlets (not shown) through which reaction gases are exhausted.

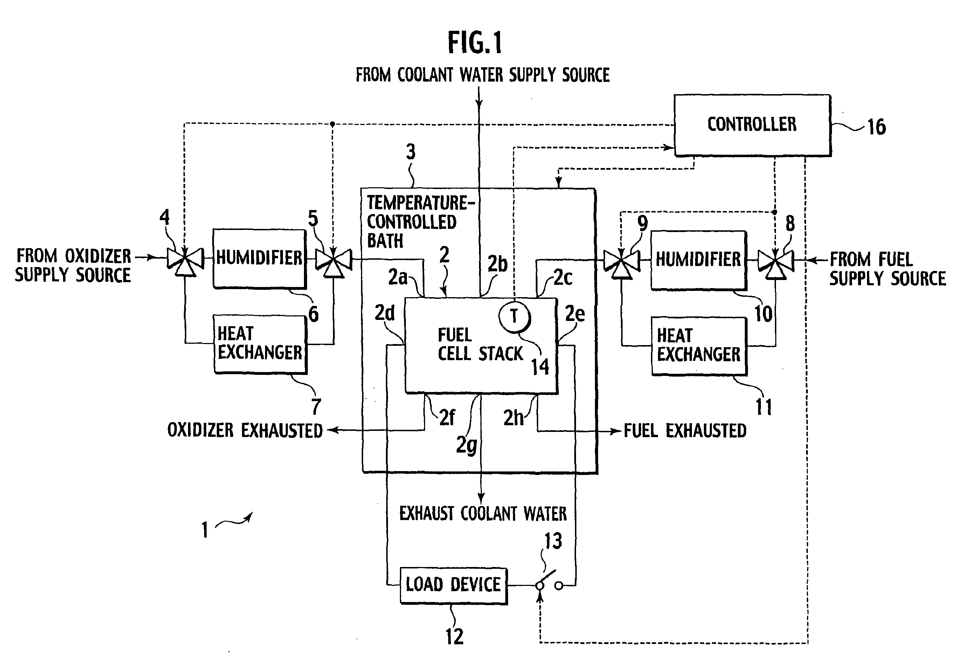

FIG. 1 is a schematic view of a fuel cell conditioning system of a first embodiment to carry out a method of conditioning a fuel cell according to the present invention. The first embodiment is directed to a theme in which a fuel cell stack 2, after assembling, is placed in a temperature-controlled bath 3, which serves as a cell temperature control device, and the temperature of the fuel cell stack 2 is controlled. An oxidizer gas supply line and a fuel supply line have humidifiers 6, 10, respectively, to allow humidified gases and dry gases to be switched over for supply to the fuel cell stack 2.

In FIG. 1, the fuel cell conditioning system 1 is comprised of, in addition to the fuel cell stack 2 which serves as an object to be conditioned, the temperature-controlled bath 3, in which the fuel cell stack 2 is placed, and the humidifiers 6, 10, three-way valves 4, 5, 8, 9, heat exchangers 7, 11, a load device 12 that consumes electric power generated by the fuel cell stack 2, a switch 13 by which the fuel cell stack 2 and the load device 12 are connected or disconnected, a temperature sensor 14 for detecting a temperature of the fuel cell stack 2, and a controller 16 for controlling the temperature-controlled bath 3, the respective three-way valves 4, 5, 8, 9 and the switch 13.

The temperature-controlled bath 3 incorporates therein heat medium, which is preferably composed of inactive insulation liquid as materials better than gases such as inactive gas or air because of excellent heat transfer performance and a fast speed in approaching to a target temperature.

The fuel cell stack 2 has an oxidizer gas inlet 2a, a coolant water inlet 2b, a fuel gas inlet 2c, a cathode 2d serving as an oxidizer electrode, an anode 2e serving as a fuel electrode, an oxidizer gas outlet 2f, a coolant water outlet 2g and a fuel gas outlet 2h, all of which are connected to associated devices located outside the temperature-controlled bath 3 for enabling the operation of the fuel cell stack 2.

Further, although not shown in FIG. 1, connected to the fuel cell stack 2 are an oxidizer supply source (not shown) such as an air compressor, a coolant water supply source (not shown) and a fuel supply source (not shown) such as a high-pressure hydrogen tank and a hydrogen pressure regulator valve.

Air supplied from the oxidizer supply source passes across the humidifier 6 or the heat exchanger 7 that are switched over upon selective actuation of the three-way valves 4, 5 and humidified air or non-humidified dry air are temperature controlled to be supplied to the oxidizer gas inlet 2a of the fuel cell stack 2.

Likewise, hydrogen supplied from the fuel supply source passes across the humidifier 10 or the heat exchanger 11 that are switched over upon selective actuation of the three-way valves 8, 9 and humidified hydrogen or non-humidified dry hydrogen are temperature controlled to be supplied to the fuel gas inlet 2c of the fuel cell stack 2.

Further, the temperature sensor 14, by which the temperature of the fuel cell stack 2 is detected, is connected to the controller 16, which is consequently enabled to control the conditioning of the fuel cell stack 2 depending on the temperature thereof.

The controller 16 has control output terminals, are connected to the temperature-controlled bath 3, three-way valves 4, 5, 8, 9 and the switch 3, for controlling the temperature of the temperature-controlled bath 3, the presence of or the absence of a need to humidify fuel gas and oxidizer gas to be supplied to the fuel cell stack 2, and the connection or disconnection between the fuel cell stack 2 and the load device 12.

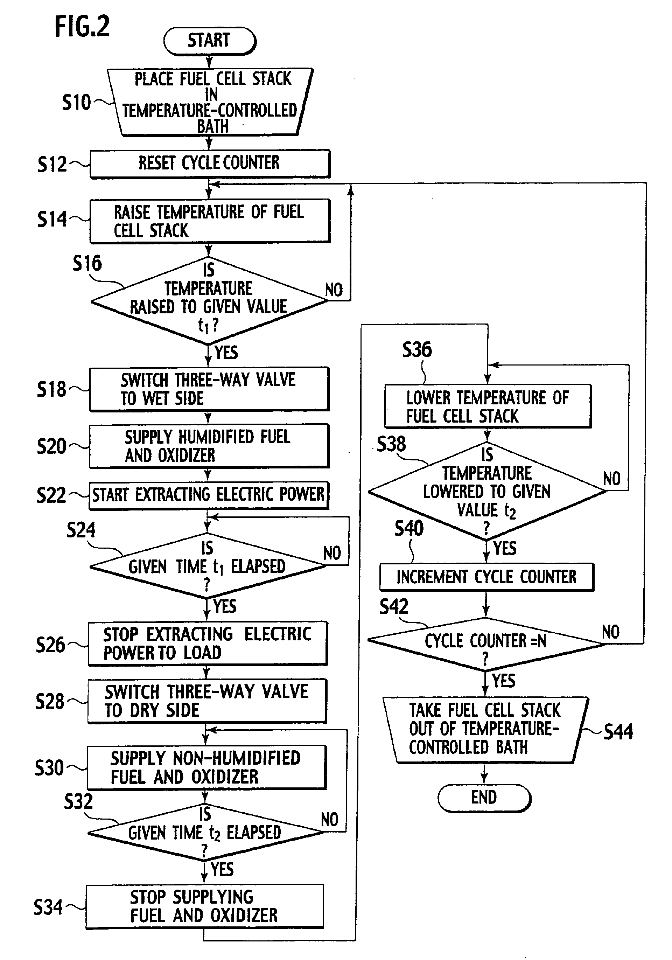

Now, a detailed description is made of a conditioning method of the presently filed embodiment with reference to a flowchart of FIG. 2. In FIG. 2, first in step (hereinafter merely abbreviated as "S") 10, the fuel cell stack 2 is placed inside the temperature-controlled bath (the cell temperature control device) 3 in preparation and the oxidizer gas delivery conduit, the coolant water conduit, the fuel gas delivery conduit, the temperature sensor connector, the anode connector and the anode connector are connected to associated component parts, respectively, upon which the controller 16 starts controlling the conditioning of the fuel cell stack 2.

In next S12, the controller 16 resets a cycle counter that counts the number of times the fuel cell stack 2 is operated for raising or lowering the temperature of the fuel cell stack 2. In succeeding S14, the controller 14 increases the temperature of the temperature-controlled bath 3 for thereby raising the temperature of the fuel cell stack 2. In consecutive S16, the controller 16 reads in a detected value of the temperature sensor 14 and discriminates whether the temperature of the fuel cell stack 2 is raised to a given temperature T1. As used herein, the "given temperature T1" refers to a normal operating temperature of the fuel cell stack 2 and may lie at 70 [°C].

Upon discrimination of operation in S16, if the temperature of the fuel cell stack 2 is not raised to the given temperature T1, the operation is routed back to S14 where the temperature of the fuel cell stack 2 is continuously raised. Upon discrimination in S16, if the temperature of the fuel cell stack 2 is raised to the given temperature T1, the operation proceeds to S18. In this moment, the controller 16 switches the three-way valves 4, 5 over to the humidifier 6 while switching the three-way valves 8, 9 over to the humidifier 10. With the presently filed embodiment, increasing the temperature of the fuel cell stack 2 to its normal operating temperature achieves the temperature rise of the fuel cell stack 2 and, hence, fuel and oxidizer being supplied are able to contain further increased moisture, enabling the solid polymer membrane to contain moisture in a further effective fashion.

In subsequent S20, the controller 16 starts supplying air and hydrogen from the oxidizer supply source and the fuel supply source, respectively, to the fuel cell stack 2 to allow humidified air and hydrogen to be supplied thereto. The flow rates and humidifying rates of fuel gas and hydrogen gas are preliminarily determined in a way to keep an optimum water balance depending on loads.

In next step S22, the controller 16 turns on the switch 13 to begin extracting electric power from the fuel cell stack 2 to the load device 12.

In consecutive step S24, the controller 16 discriminates whether an elapsed time from the start of extracting the electric power exceeds a given time interval t1 and if not, the operation is waited in S24 until the given time elapses. As used herein, the term "given time t1" refers to a time for which the fuel cell stack 2 is continuously operated and may be set to a value of 30 minutes.

In S24, if the given time t1 has elapsed, the operation proceeds to S26, wherein the switch 13 is turned off to stop extracting the electric power from the fuel cell 2 to the load device 12. In succeeding S28, the controller 28 switches the three-way valves 4, 5, 8, 9 over to the heat exchangers 7, 11. In consecutive S30, non-humidified fuel gas (hydrogen gas) and non-humidified oxidizer gas (air) are supplied to the fuel cell stack 2 to begin dry purging. This allows liquid water, prevailing in the oxidizer gas flow channel and the fuel gas flow channel of the fuel cell stack 2, and the supply and exhaust lines for fuel and oxidizer, to be expelled from the oxidizer gas output 2f and fuel gas outlet 2h to the outside of the fuel cell stack 2.

In succeeding step S32, the controller 16 discriminates whether a given time t2 has elapsed from the start of the operation in S30. As used herein, the term "given time t2" refers to a time for which liquid water can be adequately discharged from the oxidizer gas channel and fuel gas channel and may be set to several seconds to several tens of seconds. Such a given time differs in accordance with a size of the fuel cell stack 2, shapes of the gas flow channels and the gas pressure and gas flow rate and can be determined upon experimental tests.

In discrimination in S32, if no given time interval t2 has elapsed, the operation proceeds to S30 wherein the dry purging is continued. In discrimination in S32, if the given time interval t2 has elapsed, the operation proceeds to S34 to stop supplying fuel gas and oxidizer gas to the fuel cell stack 2 from the fuel supply source and oxidizer supply source.

In next S36, the controller 16 controls the temperature-controlled bath 3 to lower the temperature of the fuel cell stack 2. In succeeding S38, the controller 16 reads a detected value of the temperature sensor 14 and discriminates whether the temperature of the fuel cell stack 2 drops below a given temperature T2. As used herein, the term "given temperature T2" refers to a temperature at which moisture in the gas flow channels inside the fuel cell stack 2 is sufficiently condensed and may preferably lie at -1 1 [°C]. Thus, with the presently filed embodiment, permitting the temperature of the fuel cell stack 2 to be lowered to a value below 0 [°C] increases the amount of moisture to be condensed, causing a further increased moisture to be contained in the solid polymer membrane.

In discrimination in S38, if the temperature of the fuel cell stack 2 is not lowered to the given temperature T2, the operation is routed back to S36 to continuously cause a drop in the temperature of the fuel cell stack 2. In discrimination in S38, if the temperature of the fuel cell stack 2 is lowered to the given temperature T2, the conditioning of one cycle is completed and the operation proceeds to S40 wherein the cycle counter is incremented by one.

Subsequently, the controller 16 discriminates in S42 whether the value of the cycle counter reaches an end value of n. Here, the end value of n may be preferably set to a value greater than a value of "2". In such a way, repeatedly executing the power generation step and temperature-drop and temperature-rise step at least two times enables water to spread into every corner of the solid polymer electrolyte membrane in an effective manner.

If the power generation step and temperature-drop and temperature-rise step are executed only one time, there is a fear of the occurrence in which the solid polymer membrane, forming the fuel cell stack 2, is hard to adequately contain water or, in contrast, if the number of time for such operations is too much, a deterioration occurs in a productivity.

In discrimination in S42, if the end value of n is not reached, the operation is branched off to S14 to continuously execute further conditioning. In discrimination in S42, if a value of the recycle counter lies at a value of n, then, the controller 16 terminates the conditioning control. In consecutive S44, the oxidizer gas delivery conduit, the coolant water delivery conduit, the fuel gas delivery conduit, the temperature sensor connector, the anode connector and the cathode connector are disconnected from the associated component parts of the fuel cell stack 2, respectively, upon which the fuel cell stack 2 is took out of the temperature-controlled bath 3 and the whole conditioning process is terminated.

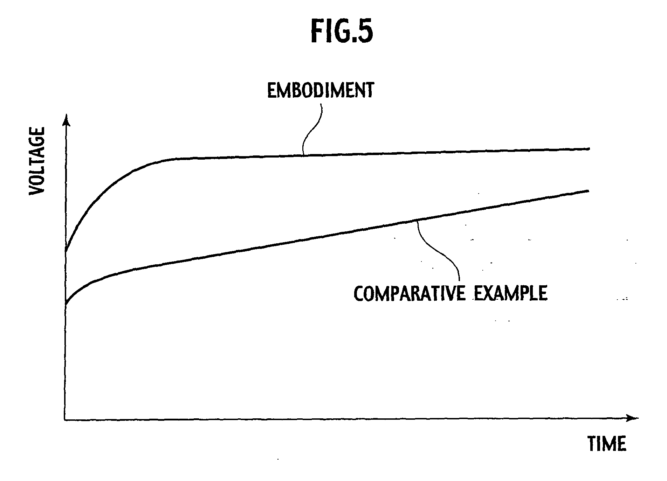

FIG. 5 is a view illustrating variations in a fuel cell voltage in terms of an operating time between a fuel cell, to which the conditioning method of the presently filed embodiment is applied, and the related art fuel cell. With the presently filed embodiment, it is apparent that with the presently filed embodiment, the fuel cell voltage sharply rises upon a start of operation whereas with the related art, the fuel cell voltage slowly rises.

### (Second Embodiment)

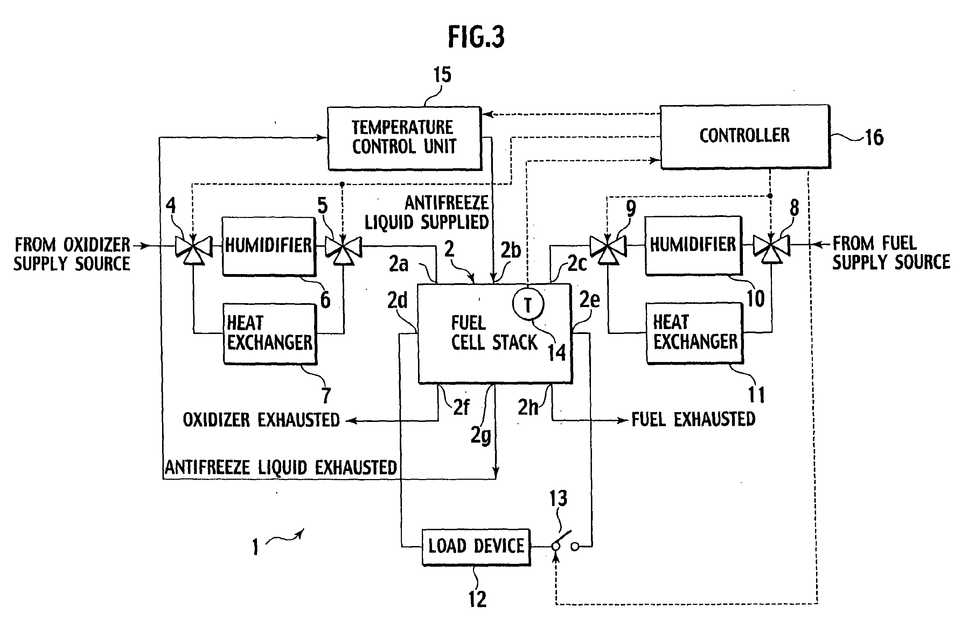

FIG. 3 is a schematic view of a fuel cell system conditioning system of a second embodiment to carry out a method of conditioning a fuel cell according to the present invention.

The fuel cell system conditioning system of the presently filed embodiment differs from that of the first embodiment in that the temperature-controlled bath is removed from the presently filed embodiment and, in place thereof, a temperature control unit 15 is used as a cell temperature control device to allow antifreeze liquid, whose temperature is varied from an operating temperature to a temperature below a freezing point, to flow through a coolant water channel of a fuel cell stack for temperature control. Therefore, the controller 16 makes a temperature command to the temperature control unit 15 instead of the temperature-controlled bath of the first embodiment.

Antifreeze liquid is supplied to the coolant water inlet 2b of the fuel cell stack 2 from an outlet of the temperature control unit 15 and flows to a coolant water outlet 2g of the fuel cell 2 from which antifreeze is circulated to the fuel cell unit 15. Antifreeze liquid is made of compound such as pure water added with freezing point depressant such as ethylene glycol.

Further, the temperature control unit 15 has a refrigerating and heating function to have an ability of cooling and heating antifreeze liquid to immediately vary the temperature of the fuel cell stack 2 between a normal temperature (of 70 [°C]) and a temperature (of - 1 [°C]) below a freezing point of pure water. Other structures of the presently filed embodiment are similar to those of the first embodiment shown in FIG. 1.

Furthermore, a detail of the conditioning method of the second embodiment is mostly similar to the flowchart of the first embodiment shown in FIG. 2 except for a few steps. That is, it will be appreciated that the operations in S10 and S44, by which the fuel cell stack 2 is placed into or taken out of the temperature-controlled bath 3, are dispensed with in the flowchart shown in FIG. 2 upon which the temperature-controlled bath 3 is paraphrased as the temperature control unit 15 such that a command for temperature rise and temperature drop is made to the temperature control unit 15.

With the second embodiment, no need arises for expelling moisture from the supply and exhaust lines for fuel and oxidizer to be supplied to the fuel cell stack, making it possible to perform the purging operation in a shorter period of time than that achieved in the first embodiment.

As set forth above, according to the present invention, although in the method of conditioning the fuel cell, decreasing the temperature of the fuel cell after terminating the step of generating electric power causes water to be condensed on the oxidizer electrode of the fuel cell, the electrolyte membrane remains in a shortage of moisture during the conditioning operation, providing an advantageous effect to allow the electrolyte membrane to effectively contain moisture.

Further, by lowering the temperature of the fuel cell stack after the termination of electric power generation, no situations occur for a rapid drop to take place in the fuel cell voltage and no fears occur for the fuel cell to be damaged.

The entire content of Japanese Patent Application No. 2004-069583 with a filing data of March 11, 2004 is herein incorporated by reference.

Although the present invention has been described above by reference to certain embodiments of the invention, the invention is not limited to the embodiments described above and modifications will occur to those skilled in the art, in light of the teachings. The scope of the invention is defined with reference to the following claims.

## Claims

1. A fuel cell conditioning system for conditioning a fuel cell stack 2 having a membrane electrode assembly 105 composed of a fuel electrode 103 and an oxidizer electrode 104, comprising:
a fuel supply line supplying fuel to the fuel electrode 103 of the fuel cell stack 2;
an oxidizer supply line supplying oxidizer to the oxidizer electrode 104 of the fuel cell stack;
a humidifier 6, 10 humidifying the fuel and the oxidizer being supplied to the fuel cell stack to supply moisture to the membrane electrode assembly thereof;
a controller 16 operative to render the fuel supply line, the oxidizer supply line and the humidifier operative to allow the fuel and the oxidizer, which are humidified, to be supplied to the fuel cell stack to generate electric power; and
a cell temperature 3, 15 control device associated with the controller to raise and lower a temperature of the fuel cell stack.

2. The fuel cell conditioning system according to claim 1, wherein the cell temperature control device 3, 15 includes a temperature-controlled bath 3, whose temperature is controlled by the controller, in which the fuel cell stack is accommodated.

3. The fuel cell conditioning system according to claims 1 or 2, wherein the fuel cell stack has a coolant flow channel; and
wherein the cell temperature control device 3, 15 includes a temperature control unit 15 connected to the coolant flow channel of the fuel cell stack and operative to circulate antifreeze liquid through the fuel cell stack for lowering the temperature of the fuel

4. The fuel cell conditioning system according to any one of preceding claims 1 to 3, further comprising purging means 5, 7, 9, 11 operative to purge residual moisture from the fuel cell stack after terminating the fuel cell stack to generate the electric power.

5. The fuel cell conditioning system according to any one of preceding claims 1 to 4, further comprising a temperature sensor 14 providing a temperature signal indicative of the temperature of the fuel cell stack; and
wherein the controller 16 controls the cell temperature control device in response to the temperature signal.

6. A method of conditioning a fuel cell stack 2 having a membrane electrode assembly 105 composed of a fuel electrode 103 and an oxidizer electrode 104, the method comprising:
raising a temperature of the fuel cell stack 2;
supplying fuel and oxidizer to the fuel cell stack;
humidifying the fuel and the oxidizer being supplied to the fuel cell stack 2 to supply moisture to the membrane electrode assembly 105 thereof;
permitting the fuel cell stack 2 to generate electric power;
stopping a supply of the fuel and the oxidizer to the fuel cell stack 2 and stopping humidifying the fuel and oxidizer; and
lowering the temperature of the fuel cell stack 2 to cause the moisture to condense in the electrode membrane assembly.

7. The method of conditioning a fuel cell stack according to claim 6, wherein:
the temperature of the fuel cell stack 2 is lowered to

8. The method of conditioning a fuel cell stack according to claims 6 or 7, wherein:
the temperature of the fuel cell stack 2 is raised to a normal operating temperature of the fuel cell stack.

9. The method of conditioning a fuel cell stack according to any one of preceding claims 6 to 8, further comprising:
purging residual moisture from the fuel cell stack 2 after interrupting supplying the fuel and the oxidizer to the fuel cell stack.

10. The method of conditioning a fuel cell stack according to any one of preceding claims 6 to 9, wherein:
permitting the fuel cell stack 2 to generate electric power and raising and lowering the temperature of the fuel cell stack are repeatedly executed at least two times.
